# EUROPEAN PATENT SPECIFICATION

(11) **EP 4 322 610 B1**
(45) Date of publication and mention of the grant of the patent: **23.09.2026**
(21) Application number: 22794738.9
(22) Date of filing: 21.04.2022
(51) Int. Cl.: H04W 36/00, H04W 24/02, H04W 52/02, H04L 5/00, H04W 48/20

(54) **COMMUNICATION PROCESSING METHOD, COMMUNICATION APPARATUS AND COMMUNICATION SYSTEM**
KOMMUNIKATIONSVERARBEITUNGSVERFAHREN, KOMMUNIKATIONSVORRICHTUNG UND KOMMUNIKATIONSSYSTEM
PROCÉDÉ DE TRAITEMENT DE COMMUNICATION, APPAREIL DE COMMUNICATION ET SYSTÈME DE COMMUNICATION

(30) Priority: 30.04.2021 CN 202110484378
(43) Date of publication of application: 14.02.2024
(73) Proprietor: Huawei Technologies Co., Ltd., Longgang Shenzhen, Guangdong 518129 (CN)
(72) Inventor: AO, Juan, Shenzhen, Guangdong 518129 (CN); LU, Jun, Shenzhen, Guangdong 518129 (CN); YANG, Qi, Shenzhen, Guangdong 518129 (CN)
(74) Representative: Körber, Martin Hans
(86) International application number: PCT/CN2022/088164
(87) International publication number: WO 2022/228267

(56) References cited:
- WO-A1-2019/212400
- WO-A1-2020/085960
- CN-A- 103 037 458
- CN-A- 105 101 415
- CN-A- 105 898 801
- CN-A- 107 046 487
- CN-A- 111 343 097
- CN-A- 111 447 655
- US-A1- 2019 215 744
- US-A1- 2020 314 683
- SYED MUHAMMAD ASAD ZAIDI ET AL: "Mobility Management in Emerging Ultra-Dense Cellular Networks: A Survey, Outlook, and Future Research Directions", ARXIV.ORG, CORNELL UNIVERSITY LIBRARY, 201 OLIN LIBRARY CORNELL UNIVERSITY ITHACA, NY 14853, 29 September 2020 (2020-09-29), XP081773713, DOI: 10.1109/ACCESS.2020.3027258

## Description

### TECHNICAL FIELD

Embodiments of this application relate to the field of communication, and in particular, to a communication processing method, and a communication apparatus.

### BACKGROUND

In a fifth-generation mobile communication technology (5th-generation, 5G), to satisfy increasing capacity requirements, a radio network needs to use more spectrum resources, larger system bandwidths, larger-scale antenna arrays, and denser base station deployment, and power consumption of a base station also increases rapidly.

In an existing communication processing solution, a base station estimates a service load status of each carrier in a future period of time. When the load is lower than a specific threshold, the base station disables the carrier and does not use resources of the carrier any longer; and when the load is higher than a specific threshold, the base station activates the carrier and continues to use the carrier to serve a terminal.

However, enabling and disabling of a carrier are periodic behaviors, and a burst service behavior of a terminal cannot be traced in a timely manner. In addition, accuracy of estimating a service load status also affects enabling and disabling of a carrier, as a result, real-time experience performance of the terminal deteriorates.

US 2020/314683 A1 discloses the enhancement of Capacity and User Quality of Service (QoS) in Mobile Cellular Networks. A method comprises operating in an idle user state; determining to exit the idle user state and enter an active user state; obtaining cell loads of cells; calculating association functions based on the cell loads; determining, from among the association functions, a first association function with a maximum value; selecting a first cell associated with the first association function as a target cell; and entering the active user state by connecting to the first cell.

US 2019/215744 A1 discloses the selecting or reselecting of a cell from among a plurality of cells. For this purpose, a mobile station is detecting cells which are candidates (i.e. candidate cells) for selection or reselection, utilizing either the normal coverage mode or the enhanced coverage mode. Further, the mobile station is selecting or reselecting a cell among the candidate cells detected, utilizing either the normal coverage mode or the enhanced coverage mode. The mobile station is performing the detection and the selection or reselection on the basis of stored information indicating, whether or not at least one of the candidate cells supports that the detection and the selection or reselection utilize the enhanced coverage mode.

### SUMMARY

Embodiments of this application provide a communication processing method, and a communication apparatus, so that not only service quality requirements are satisfied, but also energy consumption of a base station is reduced.

According to a first aspect, an embodiment of this application provides a communication processing method according to claim 1. The method may be performed by a communication apparatus, or may be performed by a component (such as a processor, a chip, or a chip system) of the communication apparatus, or may be performed by a logical module or software that can implement all or some functions of the communication apparatus.

In the foregoing first aspect, when the terminal device accesses a network provided by the communication apparatus, the communication apparatus may obtain, from a neighboring cell of the cell in which the terminal device accesses the network, a candidate cell of which signal quality satisfies a candidate threshold, and obtain a plurality of candidate cell sets based on a single candidate cell or a candidate cell combination, where the candidate cell combination is a combination of at least two candidate cells. The communication apparatus may obtain the first quality of service of each candidate cell set, obtain the load and energy consumption of the candidate cell to determine the energy consumption estimation value, to determine a target cell set of which first quality of service satisfies a target value and of which an energy consumption estimation value satisfies an energy consumption condition. A target cell set of an ordinary terminal device is a target cell, and a target cell set of a CA terminal device is a target cell combination including at least two target cells. The terminal device may transmit data to the communication apparatus based on the target cell set. The communication apparatus may select a cell set with low energy consumption as a target cell set of a terminal, and select a cell corresponding to first quality of service that satisfies experience performance of the terminal, so that not only service quality requirements are satisfied, but also energy consumption of a base station is saved.

Further, the energy consumption estimation value is determined based on parameters including a fitting parameter. The fitting parameter indicates a change relationship between the load and energy consumption of the candidate cell, wherein the change relationship indicates that there is a corresponding change in energy consumption for different loads.

In the foregoing, for load and energy consumption of each cell pre-obtained by the communication apparatus, the communication apparatus may first determine a fitting parameter corresponding to each cell, where the fitting parameter may indicate a change relationship between the load and the energy consumption of each cell, and may be specifically a numerical change relationship. To be specific, the communication apparatus may determine a corresponding fitting parameter based on the foregoing determined candidate cell, and then determine an energy consumption estimation value of each candidate cell set.

Lastly, the method further includes: obtaining spectral efficiency of the terminal device accessing the network and a bandwidth of the candidate cell; and determining an energy consumption estimation value based on at least the spectral efficiency, the fitting parameter, and the bandwidth of the candidate cell, where an energy consumption estimation value of the candidate cell combination is determined based on an energy consumption estimation value of a candidate cell in the candidate cell combination.

In the foregoing, the communication apparatus obtains the spectral efficiency of the terminal accessing the network, and obtains the bandwidth of the determined candidate cell. To be specific, the energy consumption estimation value may be determined by at least combining several parameters, such as the spectral efficiency, the fitting parameter, and the bandwidth of the candidate cell, where an energy consumption estimation value of the candidate cell combination is determined by an energy consumption estimation value corresponding to each candidate cell in the candidate cell combination, wherein the energy consumption estimation value, EnergyCons, satisfies the formula: $EnergyCons = {\left(\frac{k}{eff ∗ BW}\right)}^{2}$.

In a possible implementation, the method further includes: obtaining the load of the candidate cell; and determining the first quality of service based on at least the spectral efficiency and the load of the candidate cell, where first quality of service of the candidate cell combination is determined based on first quality of service of the candidate cell in the candidate cell combination.

In the foregoing possible implementation, the communication apparatus obtains load of each candidate cell by using a network, and then determines the first quality of service by at least combining several parameters, such as the foregoing obtained spectral efficiency and the load of each candidate cell, where the first quality of service of the candidate cell combination is determined by first quality of service corresponding to each candidate cell in the candidate cell combination.

In a possible implementation, the spectral efficiency is determined based on parameters including signal quality of the cell in which the terminal device accesses the network and signal quality of an intra-frequency neighboring cell.

In the foregoing possible implementation, the communication apparatus may further obtain the signal quality of the cell in which the terminal device accesses the network and the signal quality of the intra-frequency neighboring cell, to be specific, may determine the foregoing spectral efficiency in combination with at least the signal quality of the cell in which the terminal device accesses the network and the signal quality of the intra-frequency neighboring cell.

In a possible implementation, the target parameter further includes a balance threshold parameter, where the balance threshold parameter is used to select a cell of which first quality of service satisfies the target value, and of which an energy consumption estimation value is lower than a threshold and/or of which an energy consumption estimation value satisfies a sorting condition.

In the foregoing possible implementation, the communication apparatus may further filter a comparison between the first quality of service and the energy consumption estimation value of each candidate cell set based on a preset or an adaptively adjusted balance threshold parameter, and select a cell of which the first quality of service satisfies the target value and of which the energy consumption estimation value is lower than the threshold as the target cell set, or select a cell of which the first quality of service satisfies the target value and of which the energy consumption estimation value satisfies the sorting condition as the target cell set.

In a possible implementation, the method further includes: determining, based on a threshold parameter set, a target parameter that satisfies an update condition, where the threshold parameter set includes a plurality of parameters; and updating the balance threshold parameter based on the target parameter.

In the foregoing possible implementation, the communication apparatus may further set a threshold parameter set, determine, based on different candidate cells and from a threshold parameter set including a plurality of parameters, a target parameter that satisfies an update condition, and then update the balance threshold parameter to the target parameter.

In a possible implementation, parameters in the threshold parameter set are periodically adjusted.

In the foregoing possible implementation, the communication apparatus may further periodically adjust the plurality of parameters in the threshold parameter set, to improve reliability of a solution.

In a possible implementation, after the step of selecting a target cell set for the terminal device based on the target parameter of each candidate cell set, the method further includes: notifying the terminal device to switch to the target cell set.

In the foregoing possible implementation, after selecting the target cell set for the terminal device, the communication apparatus may notify the terminal device of the target cell set, so that the terminal device can transmit data to the communication apparatus by using the target cell set.

In a possible implementation, the energy consumption condition includes that the energy consumption estimation value of the target cell set is lower than a threshold, and/or that the energy consumption estimation value of the target cell set satisfies a sorting condition in a plurality of candidate cell sets.

In the foregoing possible implementation, the energy consumption estimation value of the target cell set satisfies an energy consumption condition that the target cell set may be any cell set of which an energy consumption estimation value is lower than the threshold and that is in the plurality of candidate cell sets, or may be any cell set of which an energy consumption estimation value is arranged in a sequence within a range and that is in the plurality of candidate cell sets, to improve flexibility of a solution.

According to a second aspect, an embodiment of this application provides a communication apparatus according to claim 6.

The communication apparatus is configured to perform the method in any one of the first aspect or the implementations of the first aspect.

According to a third aspect, an embodiment of this application provides a computer-readable storage medium according to claim 7.

According to a fourth aspect, an embodiment of this application provides a computer program product according to claim 8.

### BRIEF DESCRIPTION OF DRAWINGS

FIG. 1 is a schematic diagram of an architecture of a network according to an embodiment of this application;
FIG. 2 is a schematic diagram of an embodiment of a communication processing method according to an embodiment of this application;
FIG. 3 is a flowchart of updating a balance threshold parameter according to an embodiment of this application;
FIG. 4 is a schematic diagram of another embodiment of a communication processing method according to an embodiment of this application;
FIG. 5 is a flowchart of target weight selection according to an embodiment of this application;
FIG. 6 is a schematic diagram of a structure of a communication apparatus according to an embodiment of this application;
FIG. 7 is a schematic diagram of another structure of a communication apparatus according to an embodiment of this application; and
FIG. 8 is a schematic diagram of a structure of a communication device according to an embodiment of this application.

### DESCRIPTION OF EMBODIMENTS

Embodiments of this application provide a communication processing method, a communication apparatus, and a communication system, so that not only service quality requirements are satisfied, but also energy consumption of a base station is reduced.

The following describes embodiments of this application with reference to accompanying drawings. It is clear that the described embodiments are merely some but not all of embodiments of this application. A person of ordinary skill in the art may learn that technical solutions provided in embodiments of this application are also applicable to a similar technical problem as a technology develops and a new scenario emerges.

In the specification, claims, and the accompanying drawings of this application, the terms "first", "second", and the like are intended to distinguish between similar objects but do not necessarily indicate a specific order or sequence. It should be understood that the data termed in such a way is interchangeable in proper circumstances, so that embodiments described herein can be implemented in other orders than the order illustrated or described herein. In addition, terms "include" and "have" and any other variants are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

A specific term "example" herein means "used as an example, embodiment or illustration". Any embodiment described as "example" is not necessarily explained as being superior or better than other embodiments.

In addition, to better describe this application, numerous specific details are given in the following specific implementations. A person skilled in the art should understand that this application can also be implemented without some specific details. In some examples, methods, means, elements, and circuits that are well-known to a person skilled in the art are not described in detail, so that a subject matter of this application is highlighted.

The following describes some terms in this application, to facilitate understanding of a person skilled in the art.
(1) A terminal device is a device with a wireless transceiver function, and may be a fixed device, a mobile device, a handheld device (for example, a mobile phone), a wearable device, an in-vehicle device, or a wireless apparatus (for example, a communication module, a modem, or a chip system) built in the foregoing device. The foregoing terminal device is configured to connect people, things, machines, and the like, and may be widely used in various scenarios. For example, the terminal device includes but not limited to a terminal for the following scenarios: cellular communication, device-to-device communication (device-to-device, D2D), vehicle-to-everything (vehicle to everything, V2X), machine-to-machine/machine type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), smart grid (smart grid), smart furniture, smart office, smart wearables, smart transportation, smart city (smart city), drones, or robots. The foregoing terminal device may be sometimes referred to as a user equipment (user equipment, UE), a terminal, an access station, a UE station, a remote station, a wireless communication device, a user apparatus, or the like.
(2) The communication apparatus may be a radio access network (radio access network, RAN) device. The radio access network device is a device that enables a terminal to access a radio network, and is also referred to as a base station, including but not limited to: an evolved NodeB (evolved NodeB, eNB), a radio network controller (radio network controller, RNC), a NodeB (NodeB, NB), a base station controller (Base Station Controller, BSC), a base transceiver station (Base Transceiver Station, BTS), a home NodeB (for example, Home evolved NodeB, Home NodeB, or HNB), and a base band unit (Base Band Unit, BBU).
(3) Reference signal received power (reference signal received power, RSRP) is one of a key parameter that may represent radio signal strength and a physical layer measurement requirement, and is an average value of signal power received on all resource elements (resource element, RE) that carry a reference signal in a symbol.

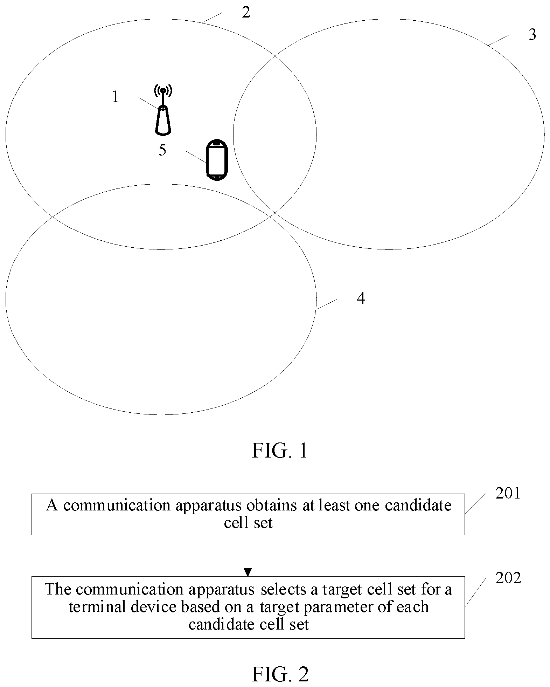

Refer to a schematic diagram of an architecture of a network shown in FIG. 1. The architecture includes a base station 1, a serving cell 2, a neighboring cell 3, a neighboring cell 4, and a terminal device 5. The neighboring cell 3 and the neighboring cell 4 may be respectively an intra-frequency neighboring cell or an inter-frequency neighboring cell. This is not specifically limited herein. The serving cell 2 is a cell in which the terminal device 5 accesses a base station network. The neighboring cell 3 and the neighboring cell 4 may be used as target cells for the base station 1 to perform cell selection, reselection, and switch for the terminal device 5.

In the conventional technologies, energy saving solutions such as symbol shutdown, channel shutdown, cell shutdown, and deep dormancy are proposed. Generally, historical traffic data on a base station side is collected, and an energy saving policy is generated based on a specific statistical model and a specific prediction model, so that an effect in which some device resources are disabled when a traffic requirement is relatively low, and finally energy consumption of a base station is reduced is implemented. These solutions can indeed achieve a relatively obvious energy saving effect in a manner of disabling some resources. However, reduced or disabled resources easily lead to severe deterioration of user experience. Therefore, to avoid affecting user experience, the foregoing energy saving solution of disabling resources is used only in a time period when traffic is extremely low, thereby greatly reducing an energy saving effect of the base station.

To resolve the foregoing problem, an embodiment of this application provides a communication processing method. The method is specifically as follows.

FIG. 2 is a schematic diagram of an embodiment of a communication processing method according to this application. The method includes the following steps.

201. A communication apparatus obtains at least one candidate cell set.

In this embodiment of this application, when a terminal device accesses a network or the communication apparatus needs to switch a cell, the communication apparatus may determine an inter-frequency neighboring cell of a cell in which the terminal device accesses a network or a serving cell that is transmitting data, and obtain signal quality of the inter-frequency neighboring cell. The inter-frequency neighboring cell is a cell that is neighboring to a serving cell in which the terminal device accesses a network and that provides a service for the terminal device through a different frequency. The cell in which the terminal device accesses the network is a serving cell in which the terminal device accesses a network of the communication apparatus. The communication apparatus may deliver a measurement event to the terminal device. The terminal device may detect the signal quality of the inter-frequency neighboring cell based on the measurement event, and feed back the signal quality of the inter-frequency neighboring cell to the communication apparatus. Optionally, the signal quality may be RSRP or reference signal received quality (reference signal received quality, RSRQ). In this embodiment of this application, the RSRP is used as an example for description.

After obtaining the RSRP of the inter-frequency neighboring cell of the serving cell, the communication apparatus may compare the RSRP of the inter-frequency neighboring cell with a candidate threshold. The candidate threshold may be preset, or may be adaptively adjusted in real time. If the RSRP of the inter-frequency neighboring cell is greater than the candidate threshold, the inter-frequency neighboring cell is used as a candidate cell; otherwise, the inter-frequency neighboring cell is not used as a candidate cell. Specifically, the candidate threshold is a common value. This is not limited in this embodiment.

The communication apparatus may determine one or more candidate cell sets based on the foregoing candidate cell. Each candidate cell set includes one candidate cell or one candidate cell combination. The candidate cell combination includes at least two candidate cells. The terminal device in this embodiment may be a common terminal device, or may be a carrier aggregation (carrier aggregation, CA) terminal device. The common terminal device performs data transmission in one cell. The CA terminal device performs data transmission in one cell combination. Correspondingly, when the terminal device is a common terminal device, each candidate cell set is one candidate cell. When the terminal device is a CA terminal device, each candidate cell set is one candidate cell combination.

202. The communication apparatus selects a target cell set for the terminal device based on a target parameter of each candidate cell set.

In this embodiment of this application, the target parameter may include first quality of service and an energy consumption estimation value of each candidate cell set. To be specific, the communication apparatus needs to determine corresponding first quality of service and an energy consumption estimation value for each candidate cell set. Specifically, when the candidate cell set is one candidate cell, the first quality of service and an energy consumption estimation value of the candidate cell set are the first quality of service and an energy consumption estimation value of the candidate cell. The energy consumption estimation value is determined by the communication apparatus based on at least load and energy consumption of the candidate cell set.

Optionally, the energy consumption estimation value is determined based on parameters including a fitting parameter. The fitting parameter indicates a change relationship between load and energy consumption of the candidate cell. The change relationship indicates that there is a corresponding change in energy consumption for different loads. To be specific, the fitting parameter may also refer to an association relationship or a correspondence between the load and the energy consumption of the candidate cell.

Specifically, after obtaining the load and the energy consumption of the candidate cell in the network, the communication apparatus may establish, based on a linear fitting or machine learning algorithm, a relationship model based on energy consumption and load of the cell. For example, a linear fitting method may be used to construct a first-order linear relationship between the energy consumption and the load, that is y = kx + b, where y is energy consumption, x is load, and the foregoing fitting parameter is k.

The communication apparatus obtains spectral efficiency of the terminal device accessing the network and a bandwidth of the candidate cell; and determines an energy consumption estimation value based on at least the spectral efficiency, the fitting parameter, and the bandwidth of the candidate cell, where an energy consumption estimation value of the candidate cell combination is determined based on an energy consumption estimation value of a candidate cell in the candidate cell combination.

The communication apparatus may obtain the spectral efficiency of the terminal device accessing the network. The communication apparatus may further obtain a bandwidth corresponding to the candidate cell, obtain a fitting parameter corresponding to the candidate cell, and determine (or may calculate) an energy consumption estimation value in combination with at least the spectral efficiency, the fitting parameter, and the bandwidth of the candidate cell. When the candidate cell set is one candidate cell combination, the energy consumption estimation value of the candidate cell combination is determined (optionally, or may be summed) based on an energy consumption estimation value of each candidate cell in the candidate cell combination.

Optionally, the communication apparatus obtains the load of the candidate cell; and determines the first quality of service based on at least the spectral efficiency and the load of the candidate cell, where first quality of service of the candidate cell combination is determined based on first quality of service of the candidate cell in the candidate cell combination.

The communication apparatus may further obtain the load of the candidate cell, and then determine (or may calculate) the first quality of service of the candidate cell in combination with the spectral efficiency and the load of the candidate cell. The first quality of service of the candidate cell combination is determined (optionally, may be summed) based on first quality of service of each candidate cell in the candidate cell combination.

Specifically, a manner of obtaining the spectral efficiency may be determined by the communication apparatus, or may be obtained from a channel quality indicator (channel quality indication, CQI) reported by the terminal. In this embodiment of this application, a manner of obtaining through calculation is used as an example. Optionally, the spectral efficiency is determined based on parameters including signal quality of the cell in which the terminal device accesses the network and signal quality of an intra-frequency neighboring cell.

After the terminal device accesses the network, the communication apparatus may further send, to the terminal device, a measurement event for measuring RSRP of the serving cell and a measurement event for measuring RSRP of the intra-frequency neighboring cell. Correspondingly, the terminal device detects the RSRP of the serving cell and the RSRP of the intra-frequency neighboring cell, and feeds back the RSRP of the serving cell and the RSRP of the intra-frequency neighboring cell to the communication apparatus. Further, the communication apparatus may obtain the load of the candidate cell, and then calculate the spectral efficiency in combination with the RSRP of the cell in which the terminal device accesses the network and the RSRP of the intra-frequency neighboring cell.

For example, the RSRP of the cell in which the terminal device accesses the network is denoted as RSRP1, a sum of the RSRP of each intra-frequency neighboring cell is denoted as RSRP2, and a background noise may be denoted as N, so that a first factor may be calculated. The first factor (represented by Gfactor) satisfies a formula: $Gfactor = \frac{RSRP 1}{RSRP 2 + N}$*.* The first factor may be converted into a decibel (dB) value, that is, Gfactor_dB, and then is mapped to the foregoing spectral efficiency. The spectral efficiency (represented by eff) satisfies a formula: eff = 0.2182 * Gfactor_dB + 0.8177. In addition, load of each candidate cell is collected. The load may be represented by resource utilization or a quantity of to-be-scheduled users, and is denoted as load. That is, the first quality of service (capacity) of the candidate cell may be $capacity = \frac{eff}{load}$*.* A physical meaning of the formula is that higher spectral efficiency and lower load indicate a higher first quality of service expected by a user. Optionally, the first quality of service of the candidate cell combination is determined by a capacity of each candidate cell in the candidate cell combination, for example, may be a sum of a capacity of each candidate cell in the candidate cell combination.

Further, the terminal device calculates a bandwidth BW of the candidate cell, and calculate the energy consumption estimation value of the candidate cell. The energy consumption estimation value (represented by EnergyCons) satisfies a formula: $EnergyCons = \frac{k}{eff ∗ BW} k / \left(eff∗BW\right)$ . Optionally, the energy consumption estimation value of the candidate cell combination is determined by EnergyCons of each candidate cell in the candidate cell combination, for example, may be a sum of EnergyCons of each candidate cell in the candidate cell combination.

In this embodiment, a manner of determining the first quality of service and the energy consumption estimation value of each candidate cell set in step 202 may also be directly determined through an estimation model. This is not limited herein.

In this embodiment of this application, the target cell set is one target cell or one target cell combination. The target cell combination includes at least two target cells. The target cell is configured to transmit data for the terminal device.

For a common terminal device, after determining the first quality of service and the energy consumption estimation value of each candidate cell, the communication apparatus may first exclude an unqualified candidate cell based on one target value. The target value is a target value of a transmission rate that satisfies user experience. When the first quality of service of the candidate cell does not satisfy the target value, the communication apparatus may exclude the candidate cell, then select a candidate cell that satisfies an energy consumption condition from remaining candidate cells, and determine the candidate cell as a target cell used by the terminal device to transmit data.

For the CA terminal device, the communication apparatus may exclude a candidate cell combination that does not satisfy the target value, then select a candidate cell combination that satisfies an energy consumption condition, and determine the candidate cell as a target cell combination used by the terminal device to transmit data.

Optionally, the energy consumption condition includes that the energy consumption estimation value of the target cell set is lower than a threshold, and/or that the energy consumption estimation value of the target cell set satisfies a sorting condition in a plurality of candidate cell sets. To be specific, the target cell set needs to be any candidate cell of which an energy consumption estimation value is lower than a threshold and that is in the plurality of candidate cell sets. The threshold may be preset or adjusted in real time. The target cell set may also be any cell set within a specific range after the energy consumption estimation values of the plurality of candidate cell sets are arranged in a specific order. For example, the target cell set may be any one candidate cell set corresponding to the first a% energy consumption estimation values sorted in ascending order, where a is an integer from 1 to 99, for example, a is 5. Optionally, the target cell set may also be a candidate cell set of which an energy consumption estimation value is lower than a threshold and that is in the plurality of candidate cell sets, may be any cell set within a specific range after the energy consumption estimation values of the plurality of candidate cell sets are arranged in a specific order, or may be a candidate cell set of which the energy consumption estimation value is the lowest and that is in the plurality of candidate cell sets. This is not specifically limited in this embodiment. In this embodiment, as an example, the candidate cell set of which the energy consumption estimation value is the lowest and that is in the plurality of candidate cell sets is used as a target cell set.

Optionally, the target parameter further includes a balance threshold parameter, where the balance threshold parameter is used to select a cell of which first quality of service satisfies the target value, and of which an energy consumption estimation value is lower than the threshold and/or of which an energy consumption estimation value satisfies the sorting condition.

The communication apparatus may define one balance threshold parameter (tradeoffTh). A plurality of candidate cell sets may be denoted as {A1, A2, A3, ..., Ai}. The communication apparatus may find a candidate cell or a candidate cell combination of which first quality of service is the highest in the plurality of candidate cell sets, and mark the candidate cell or the candidate cell combination as opt, so that the corresponding first quality of service is opt_capacity, and then calculate a ratio of the opt_capacity to the first quality of service of the candidate cell set Ai_capacity in turn. If there are a plurality of candidate cell sets in which a ratio is smaller than the tradeoffTh, the candidate cell set of which the energy consumption estimation value is the lowest is selected as the target cell set. If a ratio of the opt_capacity to the Ai_capacity is greater than the tradeoffTh, a candidate cell set corresponding to opt is a target cell set that is finally determined.

Optionally, the communication apparatus determines, based on a threshold parameter set, a target parameter that satisfies an update condition, where the threshold parameter set includes a plurality of parameters; and updates the balance threshold parameter based on the target parameter.

The communication apparatus may determine, by using a machine learning algorithm, a target parameter that satisfies an update condition from a plurality of parameters in a threshold parameter set, to update the balance threshold parameter. The update condition is that an actual quality of service of a candidate cell set satisfies a target value, and energy efficiency in a case that the target parameter is used is the highest. The energy efficiency is determined by a ratio of cell traffic to an actual energy consumption value.

Optionally, parameters in the threshold parameter set are periodically adjusted, to improve reliability of the target parameter.

The machine learning algorithm may be a supervised learning algorithm or a reinforcement learning algorithm. In this embodiment, the reinforcement learning algorithm is used as an example. The reinforcement learning Qlearning algorithm is used to obtain a tradeoffTh value that satisfies the target value and has the highest energy efficiency.

For example, the Qlearning algorithm is as follows.
(1) A state (state) is defined as average load of all cells, and is divided into four ranges: s0 = [0,0.1], s1 = (0.1,0.3], s2 = (0.3,0.5], and s3 = (0.5,1]. action is a group of tradeoffTh values, and is defined as a parameter set action {1,1.5,2,2.5,3,3.5,4,4.5,5,5.5}. Q value is defined as: Q(s, a) = (1 - alfa) * Q(s, a) + alfa * Reward(s, a). Reward(s, a) is equal to a cell traffic (Traffic) statistical value of all cells corresponding to a state s and a parameter a divided by an actual energy consumption value, where the actual energy consumption value is energy consumption of the communication apparatus within a preset time, and the traffic statistical value is traffic of all cells that the communication apparatus belongs to. An initial Q table is 4 x 10, and stores Q values of each state and action.
(2) A value of each parameter in the parameter set is periodically adjusted, then after the terminal device switches to the target cell set, an actual traffic statistical value, an actual energy consumption value, and actual quality of service in a current network are obtained, and the Q table is updated. Optionally, when the actual quality of service is lower than the target value, Q(s,a) may be set to 0, to avoid selecting an action value that does not satisfy user experience.
(3) An optimal action in each state is an action value corresponding to the maximum Q value. If the optimal action in a specific state remains unchanged for N consecutive times, the action in the state is considered to be converged, learning of the state is stopped, and an action application phase is started. To be specific, a target value corresponding to the action value in the state is optimal. The communication apparatus may use the action value as tradeoffTh based on load of the state of the candidate cell.

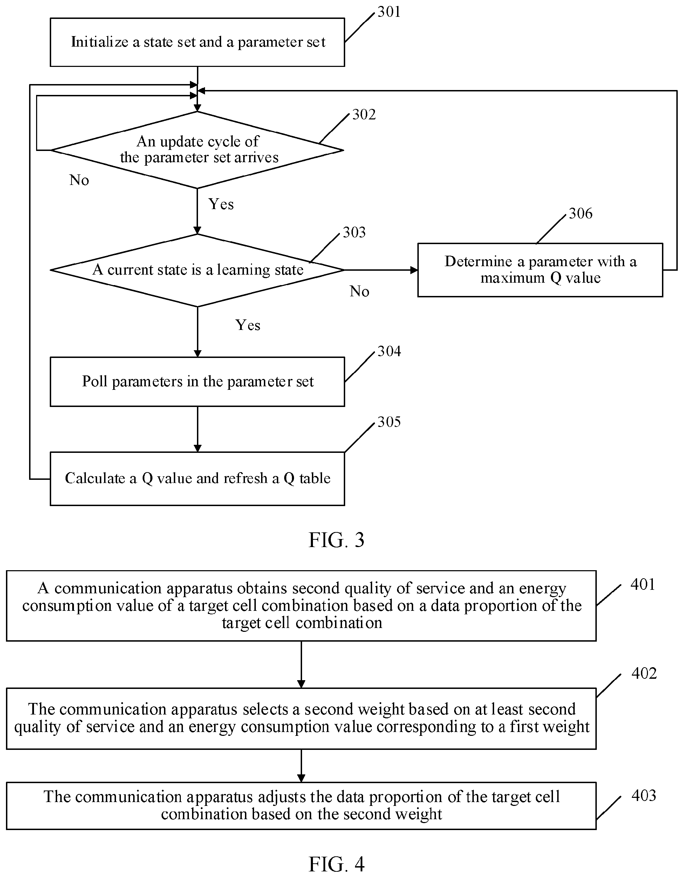

Specifically, execution steps of the learning algorithm may be shown in a tradeoffTh update flowchart in FIG. 3.

Step 301: Initialize a state set and a parameter set. Step 302: Determine whether an update cycle of the parameter set arrives; if the update cycle of the parameter set arrives, step 303 is performed; or if the update cycle of the parameter set does not arrive, step 302 is performed. Step 303: Determine whether a current state is a learning state; if the current state is a learning state, step 304 is performed; or if the current state is not a learning state, step 306 is performed. Step 304: Poll parameters in the parameter set. Step 305: Calculate a Q value and refresh a Q table, and then perform step 302. Step 306: Determine a parameter with a maximum Q value, and then continue to perform step 302.

Optionally, after determining the target cell set, the communication apparatus may further notify the terminal device to switch to the target cell set. The communication apparatus may notify the terminal device through the foregoing serving cell, or notify the terminal device or another terminal device that does not access a network in a broadcast manner.

In this embodiment of this application, the communication apparatus selects a target cell set for transmitting data for the terminal device based on at least the first quality of service and energy consumption estimation values of the plurality of candidate cell sets. A cell set with low energy consumption may be selected as a target cell set of the terminal device, and a cell corresponding to a quality of service that satisfies experience performance of the terminal device may also be selected, so that not only service quality requirements of a user can be satisfied, but also energy consumption of the communication apparatus can be reduced.

For a CA terminal device, the CA terminal device performs data transmission by using a plurality of cells, and a data transmission proportion of each cell affects energy consumption of the communication apparatus.

To resolve the foregoing problem, refer to FIG. 4. As shown in FIG. 4, this application provides a communication processing method. The method includes the following steps.

401. A communication apparatus obtains second quality of service and an energy consumption value of a target cell combination based on a data proportion of the target cell combination.

In this embodiment, the data proportion is a data transmission proportion corresponding to distribution of a plurality of cells of the CA terminal device in the target cell combination. The target cell combination may be the target cell combination determined in step 202 in the method shown in FIG. 2, or may be a target cell combination in which another CA terminal device that accesses the network is performing data transmission.

Specifically, the target cell combination includes at least two target cells. During communication processing of each CA terminal device, a target cell in the target cell combination is denoted as i, and spectral efficiency corresponding to the target cell i is eff*ᵢ*. The spectral efficiency is directly obtained by the communication apparatus from a CQI reported by the CA terminal. A bandwidth is denoted as BW*ᵢ*. For a fitting parameter of the target cell i, refer to related descriptions of step 202 in the method shown in FIG. 2. The fitting parameter is denoted as k*ᵢ*, and may be used to calculate an intermediate quantity. The intermediate quantity (represented by Cᵢ) satisfies a formula: ${C}_{i} = {BW}_{i} ∗ {eff}_{i} ∗ \left(1+\frac{w}{{k}_{i}}\right)$, where w is a weight of a data proportion adjusted by the communication apparatus. A data proportion (represented by dataRatioᵢ) obtained by the target cell i satisfies a formula: ${dataRatio}_{i} = \frac{{C}_{i}}{{\sum }_{i = 0}^{N - 1} {C}_{i}}$.

The communication apparatus may adjust w in ascending order, and directly obtain an actual second quality of service and an actual second energy consumption value of the target cell combination based on a data proportion corresponding to each w in the network.

402. The communication apparatus selects a second weight based on at least second quality of service and an energy consumption value corresponding to the first weight.

In this embodiment, after obtaining second quality of service and an energy consumption value corresponding to each w, the communication apparatus may select a target weight in which the second quality of service satisfies a target value and the energy consumption value satisfies an energy consumption condition. Optionally, the energy consumption condition includes that the energy consumption value corresponding to the second weight is lower than a threshold, and/or that the energy consumption value corresponding to the second weight satisfies a sorting condition in the energy consumption value corresponding to the first weight.

To be specific, the second weight is any weight of which an energy consumption value is lower than the threshold and that corresponds to the first weight. The threshold may be preset or adjusted in real time. The second weight may also be any weight in a specific range after the energy consumption values corresponding to the first weight are arranged in a specific order. For example, the second weight may be any one of the first weights corresponding to the first 5% energy consumption values sorted in ascending order. Optionally, the second weight may also be any weight of which an energy consumption value is lower than the threshold and that corresponds to the first weight and in a specific range after the energy consumption values corresponding to the first weight are arranged in a specific order, or may be a weight of which an energy consumption value is the lowest and that corresponds to the first weight. This is not specifically limited in this embodiment. In this embodiment, as an example, the weight of which an energy consumption value is the lowest and that corresponds to the first weight is used as the second weight.

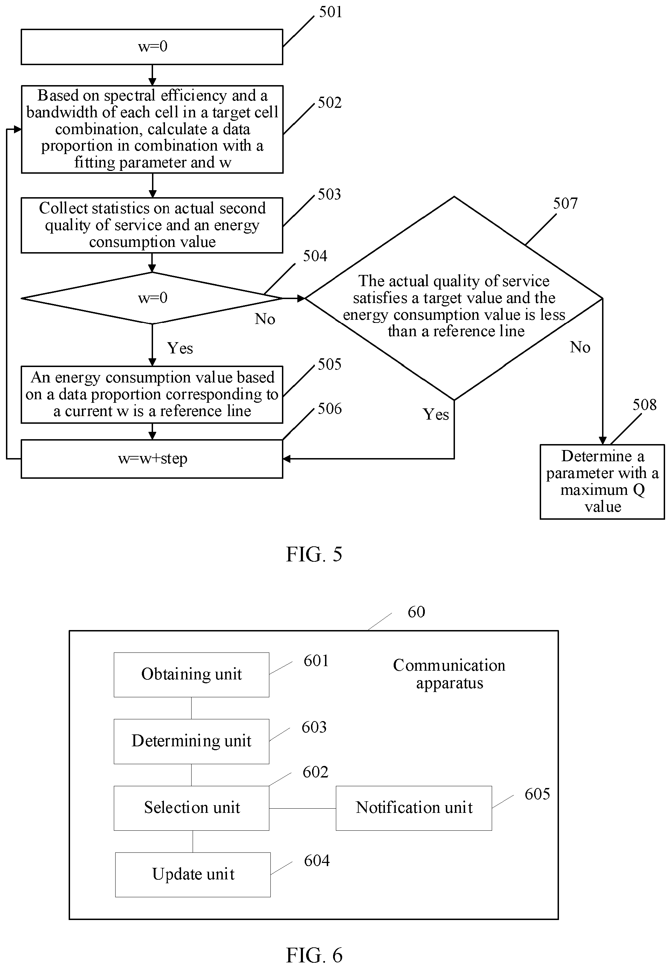

Optionally, the step of selecting the second weight may be shown in FIG. 5. Step 501 is to initialize w to 0, that is, w = 0. Step 502 is that the communication apparatus obtains spectral efficiency and a bandwidth of each cell in the target cell combination, and calculates a data proportion in combination with a fitting parameter and w. For the fitting parameter, refer to related descriptions of step 203 in the method shown in FIG. 2. Step 503 is that the communication apparatus adjusts a data transmission proportion of each cell in the target cell combination based on the data proportion, and correspondingly collects statistics on the actual second quality of service and energy consumption value. Step 504 is to determine whether a current w is equal to 0; if w is equal to 0, step 505 is performed; or if w is not equal to 0, step 507 is performed. Step 505 is that the communication apparatus records an energy consumption value based on a data proportion corresponding to the current w as a reference line. Step 506 is that w = w + step, and step 502 is performed, where step is a preset parameter or a parameter that can be adaptively adjusted. Step 507 is that the communication apparatus determines whether second quality of service based on the current w satisfies the target value and whether the energy consumption value is less than the reference line; if the second quality of service based on the current w satisfies the target value and the energy consumption value is less than the reference line, step 506; or if the second quality of service based on the current w does not satisfy the target value and the energy consumption value is not less than the reference line, step 508 is performed. Step 508 is to stop adjusting w, and determine the second weight: w = w - step.

403. The communication apparatus adjusts the data proportion of the target cell combination based on the second weight.

The communication apparatus may input the second weight into the formula of calculating the data proportion in step 401, to obtain a data proportion corresponding to each cell in the target cell combination, and then adjust a data transmission proportion of the CA terminal device in each cell based on the data proportion.

In this embodiment, the communication apparatus calculates the second quality of service and the energy consumption value based on the data proportion and the fitting parameter in the target cell combination corresponding to different weights, to determine the second weight in which the second quality of service satisfies the target value and the energy consumption value satisfies the energy consumption condition, and then adjusts the data proportion of the target cell combination based on the target weight, so that more data may be preferentially allocated to cells with lower energy consumption, thereby achieving the objective of energy saving.

The foregoing describes the communication processing method. The following describes a communication apparatus in embodiments of this application with reference to the accompanying drawings.

FIG. 6 is a schematic diagram of an embodiment of a communication apparatus 60 according to an embodiment of this application.

As shown in FIG. 6, an embodiment of this application provides a communication apparatus. The communication apparatus includes:
an obtaining unit 601, configured to obtain at least one candidate cell set, where each candidate cell set includes one candidate cell or one candidate cell combination, the candidate cell combination includes at least two candidate cells, the candidate cell is a neighboring cell of which signal quality satisfies a candidate threshold, and the neighboring cell is a cell neighboring to a cell in which a terminal device accesses a network; and
a selection unit 602, configured to select a target cell set for the terminal device based on a target parameter of each candidate cell set, where the target parameter includes first quality of service and an energy consumption estimation value of each candidate cell set, the target cell set is a target cell or a target cell combination, the target cell combination includes at least two target cells, the target cell is configured to transmit data for the terminal device, the energy consumption estimation value is determined based on parameters including load and energy consumption of the candidate cell, first quality of service corresponding to the target cell set satisfies a target value, and an energy consumption estimation value corresponding to the target cell set satisfies an energy consumption condition.

Optionally, the energy consumption estimation value is determined based on parameters including a fitting parameter. The fitting parameter indicates a change relationship between load and energy consumption of the candidate cell.

Optionally, the obtaining unit 601 is further configured to obtain spectral efficiency of the terminal device accessing the network and a bandwidth of the candidate cell.

The communication apparatus further includes a determining unit 603, and the determining unit 603 is specifically configured to:
determine the energy consumption estimation value based on at least the spectral efficiency, the fitting parameter, and the bandwidth of the candidate cell, where an energy consumption estimation value of the candidate cell combination is determined based on an energy consumption estimation value of a candidate cell in the candidate cell combination.

Optionally, the obtaining unit 601 is further configured to:
obtain the load of the candidate cell.

The determining unit 603 is further configured to:
determine first quality of service based on at least the spectral efficiency and the load of the candidate cell, where first quality of service of the candidate cell combination is determined based on first quality of service of a candidate cell in the candidate cell combination.

Optionally, the spectral efficiency is determined based on parameters including signal quality of the cell in which the terminal device accesses the network and signal quality of an intra-frequency neighboring cell.

Optionally, the target parameter further includes a balance threshold parameter, where the balance threshold parameter is used to select a cell of which first quality of service satisfies the target value, and of which an energy consumption estimation value is lower than a threshold and/or of which an energy consumption estimation value satisfies a sorting condition.

Optionally, the communication apparatus further includes an update unit 604, and the update unit 604 is specifically configured to:
determine, based on a threshold parameter set, a target parameter that satisfies an update condition, where the threshold parameter set includes a plurality of parameters; and
update the balance threshold parameter based on the target parameter.

Optionally, parameters in the threshold parameter set are periodically adjusted.

Optionally, the communication apparatus further includes a notification unit 605, and the notification unit 605 is specifically configured to:
notify the terminal device to switch to the target cell set.

Optionally, the energy consumption condition includes that the energy consumption estimation value of the target cell set is lower than a threshold, and/or that the energy consumption estimation value of the target cell set satisfies a sorting condition in plurality of candidate cell sets.

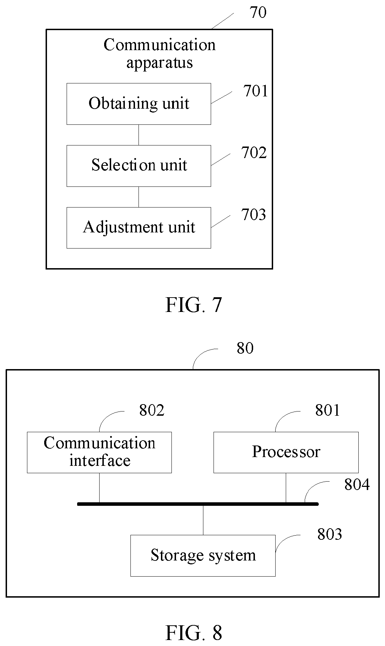

FIG. 7 is a schematic diagram of another embodiment of a communication apparatus 70 according to an embodiment of this application.

As shown in FIG. 7, an embodiment of this application provides a communication apparatus. The communication apparatus includes:
an obtaining unit 701, configured to obtain second quality of service and an energy consumption value of a target cell combination based on a data proportion of the target cell combination, where the target cell combination includes at least two target cells, the data proportion is a data transmission proportion that is of a terminal device and that is corresponding to each target cell in the target cell combination, and the data proportion is adjusted based on parameters including a first weight;
a selection unit 702, configured to select the second weight based on at least second quality of service and the energy consumption value corresponding to the first weight, where second quality of service corresponding to the second weight satisfies a target value, and an energy consumption value corresponding to the second weight satisfies an energy consumption condition; and
an adjustment unit 703, configured to adjust the data proportion of the target cell combination based on the second weight.

Optionally, the data proportion is adjusted based on parameters including a fitting parameter, and the fitting parameter is determined based on parameters including load and energy consumption of the target cell.

Optionally, the energy consumption condition includes that the energy consumption value corresponding to the second weight is lower than a threshold, and/or that the energy consumption value corresponding to the second weight satisfies a sorting condition in the energy consumption value corresponding to the first weight.

Optionally, the terminal device is a carrier aggregation CA terminal device.

FIG. 8 is a schematic diagram of a possible logical structure of a communication device 80 according to an embodiment of this application. The communication device 80 includes a processor 801, a communication interface 802, a storage system 803, and a bus 804. The processor 801, the communication interface 802, and the storage system 803 are connected to each other through the bus 804. In this embodiment of this application, the processor 801 is configured to control and manage an action of the communication device 80. For example, the processor 801 is configured to perform steps performed by the communication apparatus in the method embodiments in FIG. 2 and FIG. 4. The communication interface 802 is configured to support the communication device 80 to communicate. The storage system 803 is configured to store program code and data of the communication device 80.

The processor 801 may be a central processing unit, a general-purpose processor, a digital signal processor, an application-specific integrated circuit, a field programmable gate array or another programmable logic device, a transistor logic device, a hardware component, or any combination thereof. The processing module may implement or execute various example logical blocks, modules, and circuits described with reference to content disclosed in this application. Alternatively, the processor 801 may be a combination that implements a computing function, for example, a combination that includes one or more microprocessors, or a combination of a digital signal processor and a microprocessor. The bus 804 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

The notification unit 605 in the communication apparatus 60 is equivalent to the communication interface 802 in the communication device 80, and the obtaining unit 601, the selection unit 602, the determining unit 603, and the update unit 604 in the communication device 60 are equivalent to the processor 801 in the communication device 80.

The obtaining unit 701, the selection unit 702, and the adjustment unit 703 in the communication apparatus 70 are equivalent to the processor 801 in the communication device 80.

The communication device 80 in this embodiment may be corresponding to the communication apparatus in the method embodiments in FIG. 2 and FIG. 4. The communication interface 802 in the communication device 80 may implement functions and/or various steps implemented by the communication apparatus in the method embodiments in FIG. 2 and FIG. 4. For brevity, details are not described herein again.

Another embodiment of this application further provides a computer-readable storage medium. The computer-readable storage medium stores computer-executable instructions. When a processor of a device executes the computer-executable instructions, the device performs the steps of the communication processing method performed by the communication apparatus in the method embodiment in FIG. 2.

Another embodiment of this application further provides a computer-readable storage medium. The computer-readable storage medium stores computer-executable instructions. When a processor of a device executes the computer-executable instructions, the device performs the steps of the communication processing method performed by the communication apparatus in the method embodiment in FIG. 4.

Another embodiment of this application further provides a computer program product. The computer program product includes computer-executable instructions, and the computer-executable instructions are stored in a computer-readable storage medium. When a processor of a device executes the computer-executable instructions, the device performs the steps of the communication processing method performed by the communication apparatus in the method embodiment in FIG. 2.

Another embodiment of this application further provides a computer program product. The computer program product includes computer-executable instructions, and the computer-executable instructions are stored in a computer-readable storage medium. When a processor of a device executes the computer-executable instructions, the device performs the steps of the communication processing method performed by the communication apparatus in the method embodiment in FIG. 4.

It may be clearly understood by a person skilled in the art that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, to be specific, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software function unit.

When the integrated unit is implemented in the form of the software function unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random-access memory (random-access memory, RAM), a magnetic disk, or an optical disc.

## Claims

1. A communication processing method, comprising:
obtaining (201) at least one candidate cell set, wherein each of the at least one candidate cell set comprises one candidate cell or one candidate cell combination, the candidate cell combination comprises at least two candidate cells, the candidate cell is a neighboring cell of which signal quality satisfies a candidate threshold, and the neighboring cell is a cell neighboring to a cell in which a terminal device accesses a network; and
selecting (202) a target cell set for the terminal device based on a target parameter of each of the at least one candidate cell set, wherein the target parameter comprises first quality of service and an energy consumption estimation value of each of the at least one candidate cell set, the target cell set is a target cell or a target cell combination, the target cell combination comprises at least two target cells, the target cell is configured to transmit data for the terminal device, the energy consumption estimation value is determined based on parameters comprising load and energy consumption of the candidate cell, first quality of service corresponding to the target cell set satisfies a target value, and an energy consumption estimation value corresponding to the target cell set satisfies an energy consumption condition,
wherein the energy consumption estimation value is determined based on parameters comprising a fitting parameter, k, and the fitting parameter indicates a change relationship between the load and energy consumption of the candidate cell, wherein the change relationship indicates that there is a corresponding change in energy consumption for different loads
**characterized in that**
the method further comprises:
obtaining spectral efficiency, eff, of the terminal device accessing the network and a bandwidth, BW, of the candidate cell; and
determining the energy consumption estimation value based on at least the spectral efficiency, the fitting parameter, and the bandwidth of the candidate cell, wherein an energy consumption estimation value of the candidate cell combination is determined based on an energy consumption estimation value of a candidate cell in the candidate cell combination, and
wherein the energy consumption estimation value, EnergyCons, satisfies the formula: $EnergyCons = {\left(\frac{k}{eff ∗ BW}\right)}^{2}$.

2. The communication processing method according to claim 1, wherein the method further comprises:
obtaining the load of the candidate cell; and
determining the first quality of service based on at least the spectral efficiency and the load of the candidate cell, wherein first quality of service of the candidate cell combination is determined based on first quality of service of the candidate cell in the candidate cell combination.

3. The communication processing method according to claim 2, wherein the spectral efficiency is determined based on parameters comprising signal quality of the cell in which the terminal device accesses the network and signal quality of an intra-frequency neighboring cell.

4. The communication processing method according to any one of claims 1 to 3, wherein the target parameter further comprises a balance threshold parameter, and the balance threshold parameter is used to select a cell of which first quality of service satisfies the target value and of which an energy consumption estimation value is lower than a threshold and/or of which an energy consumption estimation value satisfies a sorting condition.

5. The communication processing method according to claim 4, wherein the method further comprises:
determining, based on a threshold parameter set, a target parameter that satisfies an update condition, wherein the threshold parameter set comprises a plurality of parameters; and
updating the balance threshold parameter based on the target parameter.

6. A communication apparatus, configured to carry out the method according to any one of claims 1 to 5.

7. A computer-readable storage medium, wherein the computer-readable storage medium stores a computer program, and when the computer program is run on a computer, the computer is enabled to perform the method according to any one of claims 1 to 5.

8. A computer program product, wherein when the computer program product is executed on a computer, the computer performs the method according to any one of claims 1 to 5.

## Patentansprüche

1. Kommunikationsverarbeitungsverfahren, umfassend:
Erlangen (201) mindestens eines Kandidatenzellensatzes, wobei jeder des mindestens einen Kandidatenzellensatzes eine Kandidatenzelle oder eine Kandidatenzellenkombination umfasst, die Kandidatenzellenkombination mindestens zwei Kandidatenzellen umfasst, die Kandidatenzelle eine benachbarte Zelle ist, deren Signalqualität einen Kandidatenschwellenwert erfüllt, und die benachbarte Zelle eine Zelle ist, die zu einer Zelle benachbart ist, in der ein Endgerät auf ein Netzwerk zugreift; und
Auswählen (202) eines Zielzellensatzes für das Endgerät basierend auf einem Zielparameter jedes des mindestens einen Kandidatenzellensatzes, wobei der Zielparameter eine erste Dienstqualität und einen Energieverbrauchsschätzwert jedes des mindestens einen Kandidatenzellensatzes umfasst, der Zielzellensatz eine Zielzelle oder eine Zielzellenkombination ist, die Zielzellenkombination mindestens zwei Zielzellen umfasst, die Zielzelle dazu konfiguriert ist, Daten für das Endgerät zu übertragen, der Energieverbrauchsschätzwert basierend auf Parametern bestimmt wird, die Last und Energieverbrauch der Kandidatenzelle umfassen, die erste Dienstqualität, die dem Zielzellensatz entspricht, einen Zielwert erfüllt und ein Energieverbrauchsschätzwert, der dem Zielzellensatz entspricht, eine Energieverbrauchsbedingung erfüllt,
wobei der Energieverbrauchsschätzwert basierend auf Parametern bestimmt wird, die einen Anpassungsparameter, k, umfassen und der Anpassungsparameter eine Änderungsbeziehung zwischen der Last und dem Energieverbrauch der Kandidatenzelle angibt, wobei die Änderungsbeziehung angibt, dass eine entsprechende Änderung des Energieverbrauchs für verschiedene Lasten vorliegt **dadurch gekennzeichnet, dass**
das Verfahren ferner Folgendes umfasst:
Erlangen der spektralen Effizienz, eff, des Endgeräts, das auf das Netzwerk zugreift, und einer Bandbreite, BW, der Kandidatenzelle; und
Bestimmen des Energieverbrauchsschätzwerts basierend auf mindestens der spektralen Effizienz, dem Anpassungsparameter und der Bandbreite der Kandidatenzelle, wobei ein Energieverbrauchsschätzwert der Kandidatenzellenkombination basierend auf einem Energieverbrauchsschätzwert einer Kandidatenzelle in der Kandidatenzellenkombination bestimmt wird und
wobei der Energieverbrauchsschätzwert, EnergyCons, die folgende Formel erfüllt: $EnergyCons = {\left(\frac{k}{eff ∗ BW}\right)}^{2}$.

2. Kommunikationsverarbeitungsverfahren nach Anspruch 1, wobei das Verfahren ferner Folgendes umfasst:
Erlangen der Last der Kandidatenzelle und
Bestimmen der ersten Dienstqualität basierend auf mindestens der spektralen Effizienz und der Last der Kandidatenzelle, wobei die erste Dienstqualität der Kandidatenzellenkombination basierend auf der ersten Dienstqualität der Kandidatenzelle in der Kandidatenzellenkombination bestimmt wird.

3. Kommunikationsverarbeitungsverfahren nach Anspruch 2, wobei die spektrale Effizienz basierend auf Parametern bestimmt wird, welche die Signalqualität der Zelle, in welcher das Endgerät auf das Netzwerk zugreift, und die Signalqualität einer Intrafrequenz-Nachbarzelle umfassen.

4. Kommunikationsverarbeitungsverfahren nach einem der Ansprüche 1 bis 3, wobei der Zielparameter ferner einen Gleichgewichtsschwellenwertparameter umfasst und der Gleichgewichtsschwellenwertparameter verwendet wird, um eine Zelle auszuwählen, deren erste Dienstqualität den Zielwert erfüllt und deren Energieverbrauchsschätzwert niedriger als ein Schwellenwert ist und/oder deren Energieverbrauchsschätzwert eine Sortierbedingung erfüllt.

5. Kommunikationsverarbeitungsverfahren nach Anspruch 4, wobei das Verfahren ferner Folgendes umfasst:
Bestimmen, basierend auf einem Schwellenwertparametersatz, eines Zielparameters, der eine Aktualisierungsbedingung erfüllt, wobei der Schwellenwertparametersatz eine Vielzahl von Parametern umfasst; und
Aktualisieren des Gleichgewichtsschwellenparameters basierend auf dem Zielparameter.

6. Kommunikationsvorrichtung, die dazu konfiguriert ist, das Verfahren nach einem der Ansprüche 1 bis 5 durchzuführen.

7. Computerlesbares Speichermedium, wobei das computerlesbare Speichermedium ein Computerprogramm speichert und, wenn das Computerprogramm auf einem Computer ausgeführt wird, der Computer in die Lage versetzt wird, das Verfahren nach einem der Ansprüche 1 bis 5 durchzuführen.

8. Computerprogrammprodukt, wobei, wenn das Computerprogrammprodukt auf einem Computer ausgeführt wird, der Computer das Verfahren nach einem der Ansprüche 1 bis 5 durchführt.

## Revendications

1. Procédé de traitement de communication, comprenant :
l'obtention (201) d'au moins un ensemble de cellules candidates, dans lequel chacun de l'au moins un ensemble de cellules candidates comprend une cellule candidate ou une combinaison de cellules candidates, la combinaison de cellules candidates comprend au moins deux cellules candidates, la cellule candidate est une cellule voisine dont la qualité de signal satisfait un seuil de candidature, et la cellule voisine est une cellule voisine d'une cellule dans laquelle un dispositif terminal accède à un réseau ; et
la sélection (202) d'un ensemble de cellules cibles pour le dispositif terminal sur la base d'un paramètre cible de chacun de l'au moins un ensemble de cellules candidates, dans lequel le paramètre cible comprend une première qualité de service et une valeur d'estimation de consommation d'énergie de chacun de l'au moins un ensemble de cellules candidates, l'ensemble de cellules cibles est une cellule cible ou une combinaison de cellules cibles, la combinaison de cellules cibles comprend au moins deux cellules cibles, la cellule cible est configurée pour transmettre des données au dispositif terminal, la valeur d'estimation de consommation d'énergie est déterminée sur la base de paramètres comprenant la charge et la consommation d'énergie de la cellule candidate, la première qualité de service correspondant à l'ensemble de cellules cibles satisfait une valeur cible, et une valeur d'estimation de consommation d'énergie correspondant à l'ensemble de cellules cibles satisfait une condition de consommation d'énergie,
dans lequel la valeur estimée de consommation d'énergie est déterminée sur la base de paramètres comprenant un paramètre d'ajustement, k, et le paramètre d'ajustement indique une relation de variation entre la charge et la consommation d'énergie de la cellule candidate, dans lequel la relation de variation indique qu'il y a une variation correspondante de la consommation d'énergie pour différentes charges **caractérisé en ce que**
le procédé comprend également :
l'obtention de l'efficacité spectrale, eff, du dispositif terminal accédant au réseau et une bande passante, BW, de la cellule candidate ; et
la détermination de la valeur d'estimation de la consommation d'énergie sur la base au moins de l'efficacité spectrale, le paramètre d'ajustement, et la bande passante de la cellule candidate, dans lequel une valeur d'estimation de consommation d'énergie de la combinaison de cellules candidates est déterminée sur la base d'une valeur d'estimation de consommation d'énergie d'une cellule candidate dans la combinaison de cellules candidates, et
dans lequel la valeur d'estimation de la consommation d'énergie, EnergyCons, satisfait la formule : $EnergyCons = {\left(\frac{k}{eff ∗ BW}\right)}^{2}$.

2. Procédé de traitement de communication selon la revendication 1, dans lequel le procédé comprend également :
l'obtention de la charge de la cellule candidate et
la détermination de la première qualité de service sur la base au moins de l'efficacité spectrale et la charge de la cellule candidate, dans lequel la première qualité de service de la combinaison de cellules candidates est déterminée sur la base de la première qualité de service de la cellule candidate dans la combinaison de cellules candidates.

3. Procédé de traitement de communication selon la revendication 2, dans lequel l'efficacité spectrale est déterminée sur la base de paramètres comprenant la qualité de signal de la cellule dans laquelle le dispositif terminal accède au réseau et la qualité de signal d'une cellule voisine intra-fréquence.

4. Procédé de traitement de communication selon l'une quelconque des revendications 1 à 3, dans lequel le paramètre cible comprend également un paramètre de seuil d'équilibre, et le paramètre de seuil d'équilibre est utilisé pour sélectionner une cellule dont la première qualité de service satisfait la valeur cible et dont une valeur d'estimation de consommation d'énergie est inférieure à un seuil et/ou dont une valeur d'estimation de la consommation d'énergie satisfait une condition de tri.

5. Procédé de traitement de communication selon la revendication 4, dans lequel le procédé comprend également :
la détermination, sur la base d'un ensemble de paramètres de seuil, d'un paramètre cible qui satisfait une condition de mise à jour, dans lequel l'ensemble de paramètres de seuil comprend une pluralité de paramètres ; et
la mise à jour du paramètre de seuil d'équilibre sur la base du paramètre cible.

6. Appareil de communication, configuré pour mettre en œuvre le procédé selon l'une quelconque des revendications 1 à 5.

7. Support de stockage lisible par ordinateur, dans lequel le support de stockage lisible par ordinateur stocke un programme informatique, et lorsque le programme informatique fonctionne sur un ordinateur, l'ordinateur est activé pour réaliser le procédé selon l'une quelconque des revendications 1 à 5.

8. Produit de programme informatique, dans lequel lorsque le produit de programme informatique est exécuté sur un ordinateur, l'ordinateur réalise le procédé selon l'une quelconque des revendications 1 à 5.
